# EUROPEAN PATENT SPECIFICATION

(11) **EP 3 075 649 B1**
(45) Date of publication and mention of the grant of the patent: **04.07.2018**
(21) Application number: 14866548.2
(22) Date of filing: 20.06.2014
(51) Int. Cl.: B64C 1/00, B32B 27/12, B32B 27/40, B64D 11/06

(54) **SHEET MATERIAL FOR AIRCRAFT INTERIOR EQUIPMENT AND MANUFACTURING METHOD THEREFOR**
BLATTMATERIAL FÜR EINE FLUGZEUGINNENRAUM-AUSRÜSTUNG UND HERSTELLUNGSVERFAHREN DAFÜR
MATÉRIAU EN FEUILLE POUR ÉQUIPEMENT INTÉRIEUR D'AVION ET SON PROCÉDÉ DE FABRICATION

(30) Priority: 27.11.2013 JP 2013244812
(43) Date of publication of application: 05.10.2016
(73) Proprietor: JAMCO CORPORATION, Mitaka-shi, Tokyo 181-8571 (JP); YOKOHAMA FOAM RUBBER CO., LTD., Kanazawa-ku Yokohama, Kanagawa 236-0002 (JP)
(72) Inventor: SUZUKI, Michihito, Mitaka-shi Tokyo 181-8571 (JP); AIZAWA, Syoji, Yokohama Kanagawa 236-0062 (JP)
(74) Representative: Novaimo
(86) International application number: PCT/JP2014/066376
(87) International publication number: WO 2015/079730

(56) References cited:
- JP-A- H0 740 441
- JP-A- S6 155 268
- JP-A- S61 177 240
- JP-A- 2012 165 798
- JP-A- 2014 144 635

## Description

### [Technical Field]

The present invention relates to a sheet material having fire resistance used on a surface of interior equipment such as a passenger's seat in an aircraft and a manufacturing method therefor.

### [Background Art]

An interior material in an aircraft has strongly been required to have fire retardancy in order to prevent an accident caused by occurrence of a fire and has many restrictions. For example, requirements such as self-extinguishing performance and ability to suppress smoke are imposed so as to ensure time and a path for evacuation of passengers and to prevent spread of the fire if a fire occurs in an aircraft in occurrence of an aircraft accident.

Under such circumstances, a cushion material on which a passenger or a crew member is seated is required to satisfy fire resistance performance specified by FAA (Federal Aviation Administration) and EASA (European Aviation Safety Agency).

This type of cushion materials is constituted by an outer cover (skin material) and a cushion.

Regarding the cushion, a fire-resistant cloth called FBL (Fire Blocking Layer) is bonded to a material having elasticity such as urethane by an adhesive.

Regarding the outer cover, basically, a fabric is sewn in accordance with the shape of the cushion and fixed to the cushion with a simplified fastener such as Velcro. However, a pad or the like for which replacement of the outer cover is not needed may be fastened by adhesion.

### [Citation List]

### [Patent Literature]

Documents JP2012/165798, JPS61/55268 and JPH07/40441 relate to fire resistant equipment suitable for aircraft.

### [Summary of Invention]

### [Technical Problem]

This type of outer covers is frequently used by passengers/crew members and can be stained easily, and thus, cleaning such as dry cleaning is needed.

Moreover, since the cushion and the outer cover do not tightly fit with each other, wrinkles and the like can easily occur on the surface.

Since these stains, wrinkles and the like can damage appearance of the entire seat, airline companies take care in quality control thereof.

The present invention has an object to provide a sheet material obtained by processing an outer cover for aircraft interior equipment which cannot generate wrinkles and the like on a skin material easily (a material in which the outer cover and the FBL are combined) and a manufacturing method therefor.

### [Solution to Problem]

In order to achieve the above described object, a sheet material of the present invention includes an FBL (Fire Blocking Layer: fire-resistant cloth) fused to one of surfaces of a fire-retardant urethane material via a melting layer and an outer cover (skin material) fused to the other surface of the fire-retardant urethane material via a melting layer.

A thickness of the melting layer of the fire-retardant urethane material to be fused to the FBL is approximately 1.5 mm, a thickness of the melting layer of the fire-retardant urethane material to be fused to the outer cover is approximately 1.5 mm, and a thickness of the remaining fire-retardant urethane material is approximately 1.5 mm.

Moreover, a manufacturing method of the sheet material of the present invention includes a step of preparing a roll of the fire-retardant urethane material and a roll of the FBL, a step of heating and melting the surface of the fire-retardant urethane material facing the FBL roll, a step of compressively bonding the surfaces of a melted surface of the fire-retardant urethane material and a surface of the FBL roll so as to manufacture a fire-retardant urethane FBL roll, a step of preparing a fused fire-retardant urethane FBL roll and an outer cover roll, a step of heating and melting the surface of the fire-retardant urethane material of the fire-retardant urethane FBL roll facing the outer cover roll, and a step of compressively bonding the melted surface of the fire-retardant urethane material and a back surface of the outer cover.

A temperature for heating the surface of the fire-retardant urethane material is 800 to 900°C, and the heating time is 0.5 to 1.5 seconds.

### [Advantageous Effects of Invention]

The sheet material for aircraft interior equipment of the present invention is provided with the structure described above and thus, a sheet material which has good appearance while fire resistance is satisfied can be obtained.

### [Brief Description of Drawings]

[FIG. 1] FIG. 1 is a perspective view of a passenger's seat in an aircraft.
[FIG. 2] FIG. 2 is a perspective view of an upper inner pad.
[FIG. 3] FIG. 3 is a perspective view of a lower inner pad.
[FIG. 4A] FIG. 4A is a sectional structural view of a sheet material.
[FIG. 4B] FIG. 4B is a sectional structural view of the sheet material.
[FIG. 4C] FIG. 4C is a sectional structural view of the sheet material.
[FIG. 5] FIG. 5 is an explanatory diagram illustrating a manufacturing process of the sheet material.
[FIG. 6] FIG. 6 is an explanatory diagram illustrating a manufacturing process of the sheet material.
[FIG. 7] FIG. 7 is an explanatory diagram of a heating process.

### [Description of Embodiments]

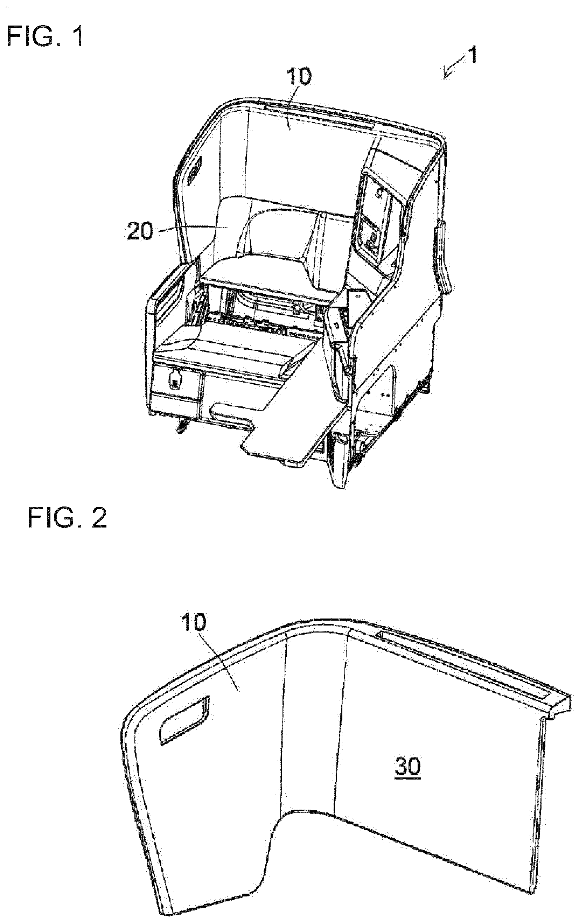

FIG. 1 illustrates an appearance of a seat for a passenger in an aircraft, and an upper inner pad 10, a lower inner pad 20 and the like are attached to an inside of the seat 1.

FIG. 2 illustrates an appearance of the upper inner pad 10, and the upper inner pad 10 is a product having a curved shape in which a sheet material 30 is bonded to a surface of a cushion conforming to a shape of an FRP molded material.

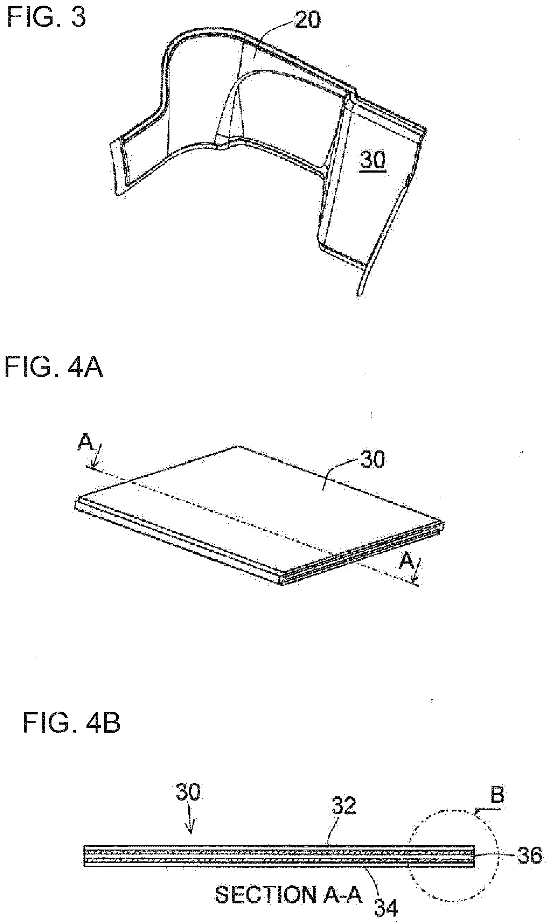

FIG. 3 illustrates an appearance of the lower inner pad 20, and the lower inner pad 20 is a product having a curved shape in which the sheet material 30 is bonded to the surface of the cushion conforming to the shape of the FRP molded material.

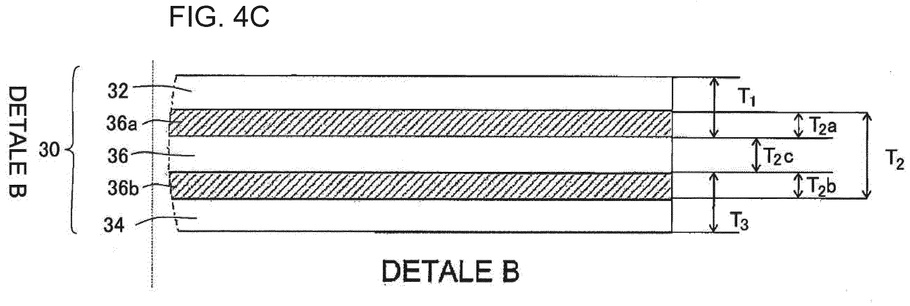

FIGS. 4A, 4B, and 4C illustrate sectional structures of the sheet material 30 made by a manufacturing method of the present invention.

The sheet material 30 of the present invention has a sectional structure in which an FBL (fire-resistant cloth) 32 and an outer cover (skin material) 34 are laminated on each of both surfaces of a fire-retardant urethane material 36.

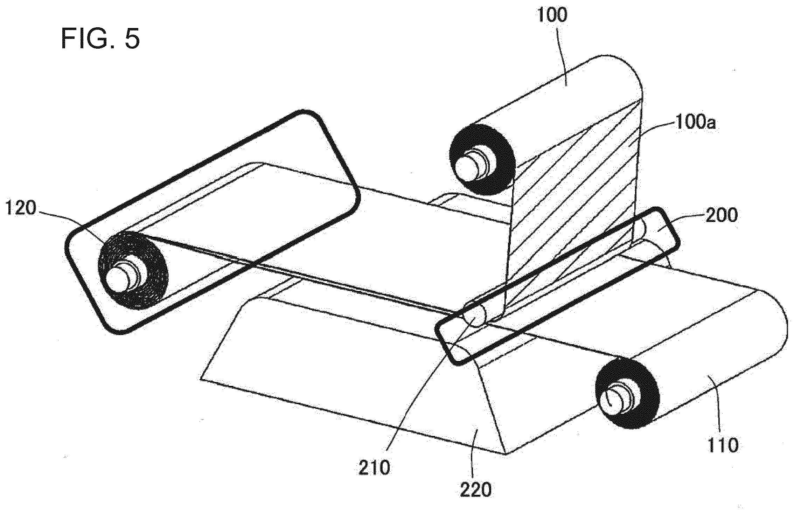

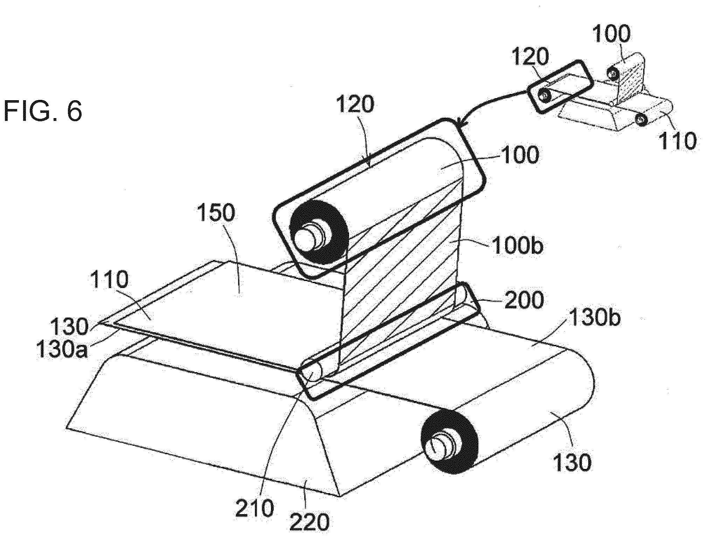

FIGS. 5 and 6 illustrate a manufacturing process of the sheet material.

In FIG. 5, a fire-retardant urethane roll 100 and an FBL roll 110 are prepared, a heated surface 100a on an FBL side of the fire-retardant urethane roll 100 in the material pulled out of the both rolls is heated by a burner 200 so as to melt a surface of the fire-retardant urethane, and it is passed together with the FBL between a pressing roll 210 and a base 220 so as to fuse the both and to make a fire-retardant urethane FBL roll 120.

Flame at approximately 800 to 900°C is applied by the burner 200 to the heated surface 100a for about 0.5 to 1.0 seconds so as to melt the surface.

The fire-retardant urethane FBL roll 120 is wound into a roll shape in a state in which the fire-retardant urethane roll 100 is on a front side and the FBL roll 110 is on a back side.

Subsequently, as illustrated in FIG. 6, the fire-retardant urethane FBL roll 120 and an outer cover roll 130 are prepared. The outer cover roll is arranged so that a back surface 130b of the outer cover faces the fire-retardant urethane roll 100.

Regarding the material pulled out of the fire-retardant urethane FBL roll 120, flame of approximately 800 to 900°C is applied by the burner 200 to a heated surface 100b of the fire-retardant urethane roll 100 for 0.5 to 1.0 seconds so as to melt the same, and the material is passed together with the outer cover 130 between the pressing roll 210 and the base 220 and compressively fused.

A completed sheet material 150 is manufactured having a lengthy band shape with a surface 130a of the outer cover 130 and the FBL roll 110 as both surfaces.

This is cut out to an appropriate dimension and used as the sheet material 30 illustrated in FIGS. 4A, 4B and 4C.

The fire-retardant urethane 36 has a thickness T₂ in an initial stage. A melting layer 36a is melt into the FBL having a thickness T₁ and the fire-retardant urethane 36 and the FBL are fused. A melted dimension T₂a is approximately 1.5 mm.

Moreover, the outer cover 34 has a thickness T₃, and a melting layer 36b of the fire-retardant urethane material 36 is melted into the outer cover 34.

A melted dimension T₂b is approximately 1.5 mm.

As a result, a thickness T₂c of the remaining fire-retardant urethane is approximately 1.5 mm.

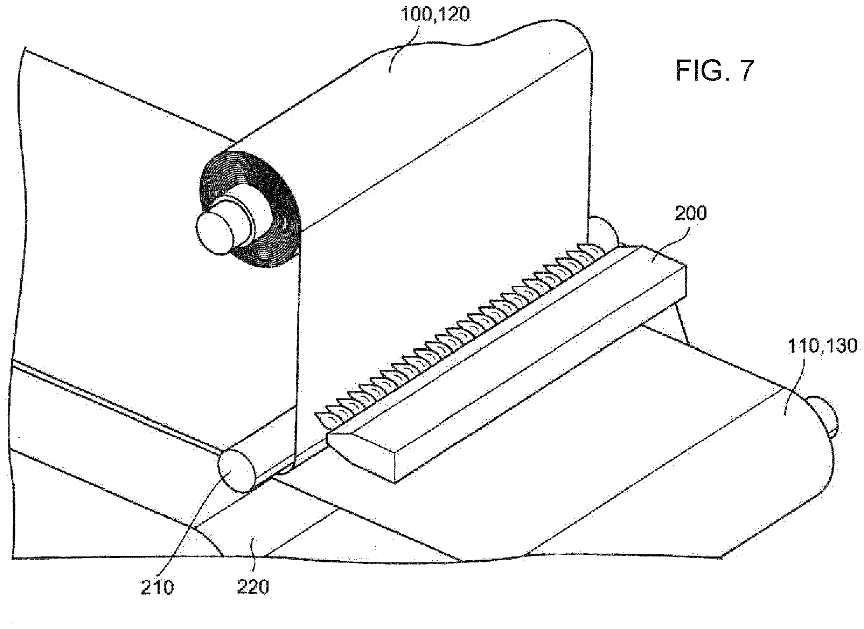

FIG. 7 is an explanatory diagram illustrating an outline of a burner used in a heating process.

As described above, the present invention can obtain a sheet material for aircraft interior equipment, which can maintain good appearance of the outer cover surface and has high durability.

### [Reference Signs List]

- 1: Seat in an aircraft
- 10: Upper inner pad
- 20: Lower inner pad
- 30: Sheet material
- 32: FBL (fire-resistant cloth)
- 34: Outer cover
- 36: Fire-retardant urethane material
- 100: Fire-retardant urethane roll
- 110: FBL roll
- 120: Fire-retardant urethane FBL roll
- 130: Outer cover roll
- 200: Burner
- 210: Pressing roll
- 220: Base

## Claims

1. A sheet material (30) for aircraft interior equipment, comprising:
a fire-retardant urethane material (36); a fire blocking layer (FBL) consisting of a fire-resistant cloth (32) fused to one of surfaces of the fire-retardant urethane material via a melting layer (36a); and
an outer cover consisting of a skin material (34) fused to the other surface of the fire-retardant urethane material via a melting layer (36b).

2. The sheet material for aircraft interior equipment according to claim 1, wherein
a thickness of the melting layer of the fire-retardant urethane material to be fused to the fire blocking layer (FBL) is approximately 1.5 mm;
a thickness of the melting layer of the fire-retardant urethane material to be fused to the outer cover is approximately 1.5 mm; and
a thickness of the remaining fire-retardant urethane material is approximately 1.5 mm.

3. A manufacturing method of the sheet material (30) for aircraft interior equipment as claimed in any previous claims,the method comprising the steps of:
preparing a roll (100) of the fire-retardant urethane material (36) and a roll (110) of the fire blocking layer (32);
heating and melting the surface of the fire-retardant urethane material facing the fire blocking layer roll;
compressively bonding the melted surface of the fire-retardant urethane material and a surface of the fire blocking layer roll to produce a fire-retardant urethane fire blocking layer roll (120); preparing a fused fire-retardant urethane fire blocking layer roll (120) and an outer cover roll (130); heating and melting a surface of the fire-retardant urethane material of the fire-retardant urethane fire blocking layer roll facing the outer cover roll; and
compressively bonding the melted surface of the fire-retardant urethane material and a back surface of the outer cover.

4. The manufacturing method of a sheet material for aircraft interior equipment according to claim 3, wherein
a temperature for heating the surface of the fire-retardant urethane material is 800 to 900°C; and
the heating time is 0.5 to 1.5 seconds.

## Patentansprüche

1. Blattmaterial (30) für eine Flugzeuginnenraumausrüstung, umfassend:
ein feuerhemmendes Urethan-Material (36);
eine Feuerschutzschicht (FBL), die aus einem feuerbeständigen Tuch (32) besteht, das auf eine der Oberflächen des feuerhemmenden Urethan-Materials über eine Schmelzschicht (36a) aufgeschmolzen ist; und
eine äußere Abdeckung, die aus einem Außenschichtmaterial (34) besteht, das auf die andere Oberfläche des feuerhemmenden Urethan-Materials über eine Schmelzschicht (36b) aufgeschmolzen ist.

2. Blattmaterial für eine Flugzeuginnenraumausrüstung nach Anspruch 1, wobei
eine Dicke der Schmelzschicht des feuerhemmenden Urethan-Materials, das auf die Feuerschutzschicht (FBL) aufgeschmolzen werden soll, ungefähr 1,5 mm beträgt;
eine Dicke der Schmelzschicht des feuerhemmenden Urethan-Materials, das auf die äußere Abdeckung aufgeschmolzen werden soll, ungefähr 1,5 mm beträgt; und
eine Dicke des restlichen feuerhemmenden Urethan-Materials ungefähr 1,5 mm beträgt.

3. Herstellungsverfahren für das Blattmaterial (30) für eine Flugzeuginnenraumausrüstung nach einem der vorhergehenden Ansprüche, wobei das Verfahren die folgenden Schritte umfasst:
Herstellen einer Rolle (100) des feuerhemmenden Urethan-Materials (36) und einer Rolle (110) der Feuerschutzschicht (32);
Erhitzen und Schmelzen der Oberfläche des feuerhemmenden Urethan-Materials, das der Feuerschutzschichtrolle zugewandt ist;
Kompressionsverbinden der geschmolzenen Oberfläche des feuerhemmenden Urethan-Materials und einer Oberfläche der Feuerschutzschichtrolle zur Herstellung einer feuerhemmenden Urethan-Feuerschutzschichtrolle (120) ;
Herstellen einer verschmolzenen feuerhemmenden Urethan-Feuerschutzschichtrolle (120) und einer äußeren Abdeckungsrolle (130);
Erhitzen und Schmelzen einer Oberfläche des feuerhemmenden Urethan-Materials der feuerhemmenden Urethan-Feuerschutzschichtrolle, die der äußeren Abdeckungsrolle zugewandt ist; und
Kompressionverbinden der geschmolzenen Oberfläche des feuerhemmenden Urethan-Materials und einer Rückseite der äußeren Abdeckung.

4. Herstellungsverfahren für ein Blattmaterial für eine Flugzeuginnenraumausrüstung nach Anspruch 3, wobei
eine Temperatur zum Erhitzen der Oberfläche des feuerhemmenden Urethan-Materials 800 bis 900°C beträgt; und
die Erhitzungszeit 0,5 bis 1,5 Sekunden beträgt.

## Revendications

1. Matériau en feuille (30) pour équipement intérieur d'avion, comprenant :
un matériau uréthane ignifuge (36) ;
une couche pare-feu (FBL) constituée d'un tissu résistant au feu (32), liée par fusion à l'une des surfaces du matériau uréthane ignifuge par l'intermédiaire d'une couche de fusion (36a) ; et
un revêtement extérieur constitué d'un matériau pelliculaire (34), lié par fusion à l'autre surface du matériau uréthane ignifuge par l'intermédiaire d'une couche de fusion (36b).

2. Matériau en feuille pour équipement intérieur d'avion selon la revendication 1, dans lequel
une épaisseur de la couche de fusion du matériau uréthane ignifuge à lier par fusion à la couche pare-feu (FBL) est d'environ 1,5 mm ;
une épaisseur de la couche de fusion du matériau uréthane ignifuge à lier par fusion au revêtement extérieur est d'environ 1,5 mm ; et
une épaisseur du matériau uréthane ignifuge restant est d'environ 1,5 mm.

3. Procédé de fabrication du matériau en feuille (30) pour équipement intérieur d'avion selon l'une quelconque des revendications précédentes, le procédé comprenant les étapes suivantes :
préparer un rouleau (100) du matériau uréthane ignifuge (36) et un rouleau (110) de la couche pare-feu (32) ;
chauffer et faire fondre la surface du matériau uréthane ignifuge faisant face au rouleau de couche pare-feu ;
coller par compression la surface fondue du matériau uréthane ignifuge et une surface du rouleau de couche pare-feu pour produire un rouleau de couche pare-feu d'uréthane ignifuge (120) ;
préparer un rouleau de couche pare-feu d'uréthane ignifuge fusionnée (120) et un rouleau de revêtement extérieur (130) ;
chauffer et faire fondre une surface du matériau uréthane ignifuge du rouleau de couche pare-feu d'uréthane ignifuge faisant face au rouleau de revêtement extérieur ; et
coller par compression la surface fondue du matériau uréthane ignifuge et une surface arrière du revêtement extérieur.

4. Procédé de fabrication d'un matériau en feuille pour équipement intérieur d'avion selon la revendication 3, dans lequel
une température de chauffage de la surface du matériau uréthane ignifuge est de 800 à 900 ºC ; et
le temps de chauffage est de 0,5 à 1,5 seconde.
